# FASCICULE DE BREVET EUROPEEN

(11) **EP 0 967 812 B1**
(45) Date de publication et mention de la délivrance du brevet: **18.03.2009**
(21) Numéro de dépôt: 99401507.1
(22) Date de dépôt: 18.06.1999
(51) Int. Cl.: H04W 4/00

(54) **Blocage d'une téléphone mobile dépendant de la localisation dans un réseau téléphonique radio**
Ortsabhängige Blockierung eines Mobiltelefons in einem Funktelefonnetz
Location dependent blocking of a mobile telephone in a radio telephone network

(30) Priorité: 23.06.1998 FR 9807941
(43) Date de publication de la demande: 29.12.1999
(73) Titulaire: SAGEM MOBILES, 75512 Paris (FR)
(72) Inventeur: Dimech, Jean Marc M., 95000 Cergy (FR); Heurtaux, Frédéric M., 95000 Cergy (FR); Porato, Marc M., 95000 Cergy (FR)
(74) Mandataire: Schmit, Christian Norbert Marie

(56) Documents cités:
- EP-A- 0 830 046
- WO-A-98/25433
- WO-A-99/13673
- GB-A- 2 313 265
- PROUDLER G: "AUTOMATICALLY DISABLING MOBILE COMMUNICATIONS DEVICES IN SENSITIVE LOCATIONS" RESEARCH DISCLOSURE, no. 391, novembre 1996 (1996-11), page 729 XP000680926

## Description

La présente invention a pour objet un procédé et un dispositif de gestion géographique du trafic, dans un réseau téléphonique, entre des téléphones mobiles et des stations de base. Le but de l'invention est de prévenir l'émission intempestive des téléphones mobiles dans certaines zones géographiques. Les zones peuvent par ailleurs être couvertes par un ou plusieurs réseaux de téléphonie mobile.

On connaît les réseaux de téléphonie mobile comportant des stations de base réparties sur un territoire. Les stations de base sont en relation avec un central téléphonique de commutation et d'acheminement de messages téléphoniques entre les différents utilisateurs ainsi qu'à d'autres abonnés reliés à des installations fixes.

En ce qui concerne les téléphones mobiles, on connaît actuellement plusieurs normes. Une première norme, dite de type GSM, comporte les réseaux GSM proprement dits émettant à 900 MHz, les réseaux DCS émettant à 1800 MHz et les réseaux PCS émettant à 1900 MHz. D'autres normes sont par ailleurs connues, dans lesquelles les messages transmis ne sont pas des messages numérisés mais sont envoyés sous une forme analogique. On connaît aussi un réseau dit Radiocom 2000, un réseau Tétrapol, pour la police.

Seront concernés par l'invention, tous les réseaux disposant d'une ou de plusieurs stations de base organisant le trafic. Ne seront donc pas directement concernés les réseaux dits Citizen Band. Ceux-ci ne sont pas à proprement parler des réseaux. En effet, il n'y a pas de circuit de contrôle du trafic.

Les problèmes présentés par les réseaux téléphoniques comportant des téléphones mobiles résultent de l'intervention intempestive de l'établissement d'une communication entre un utilisateur d'un téléphone mobile et un autre interlocuteur alors que l'utilisateur du téléphone mobile se trouve dans un lieu où cette intervention n'est pas attendue. Par exemple, au moment d'une représentation théâtrale ou d'un concert symphonique, la sonnerie d'un téléphone mobile est ressentie comme une gêne. D'autre part, dans des zones particulièrement dangereuses, par exemple telles que des raffineries ou des couloirs de mines, des normes antidéflagrantes imposent d'empêcher les émissions des téléphones mobiles pour éviter les explosions. En outre, dans le domaine de la sécurité, compte tenu que les téléphones mobiles peuvent être utilisés pour déclencher des bombes à distance, il peut être utile de neutraliser certaines zones, notamment celles où se déplacent les personnalités officielles lors de voyages solennels.

Dans l'état actuel de la technique, on est obligé de s'en remettre au civisme des utilisateurs, avec malheureusement l'insuccès qu'on connaît. Autrement dit, un système qui serait automatique et qui empêcherait réellement les utilisateurs de se servir de leur téléphone mobile est recherché.

L'invention a pour objet de remédier à ces inconvénients en proposant une organisation géographique du trafic dans laquelle on associe à des zones à protéger des stations de base spéciales.

Un procédé de gestion géographique du traffic est connu du document GB 2 313 265 A. Un dispositif de gestion géographique du traffic est connu du document "Automatic disabling mobile communications devices in sensitive locations", Research Disclosure 391, page 729 (XP 000680926).

L'invention fournit un procédé de gestion géographique du trafic selon revendication 1 ou 2 et un dispositif de gestion géographique du trafic selon revendication 16.

L'invention sera mieux comprise à la lecture de la description qui suit et à l'examen des figures qui l'accompagnent. Celles-ci ne sont données qu'à titre indicatif et nullement limitatif de l'invention. Les figures montrent :
Figures 1a à 1e : des diagrammes de rappel de signaux utilisés dans la transmission avec des téléphones mobiles et leur modification selon le procédé de l'invention,
Figure 2 : une représentation schématique du passage d'un téléphone mobile dans une zone neutralisée selon l'invention,
Figure 3 : un organigramme d'actions à mettre en oeuvre, selon l'invention, dans un téléphone mobile (ou dans un central téléphonique de commande),
Figures 4a et 4b : les variations de la nature des messages échangés entre un central téléphonique et un téléphone mobile, selon l'état d'équipement de ce dernier,
Figures 5a et 5b : une illustration d'un mode de neutralisation conditionnelle selon l'invention,
Figure 6 : un mode de réalisation particulièrement simple d'un dispositif de neutralisation d'une zone géographique,
Figure 7 : un mode généralisé de neutralisation avec diffusion d'une cartographie de neutralisation.

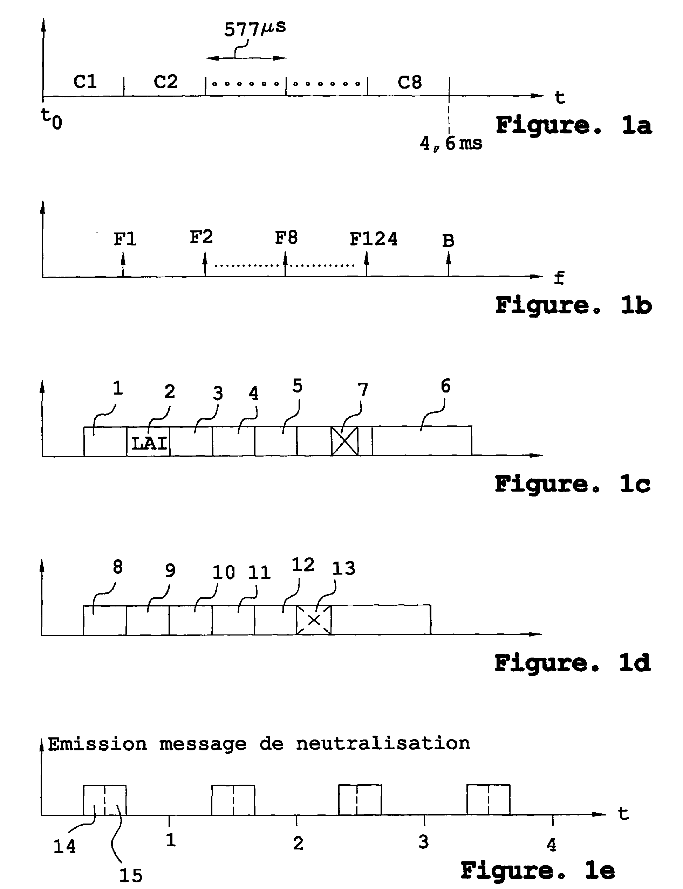

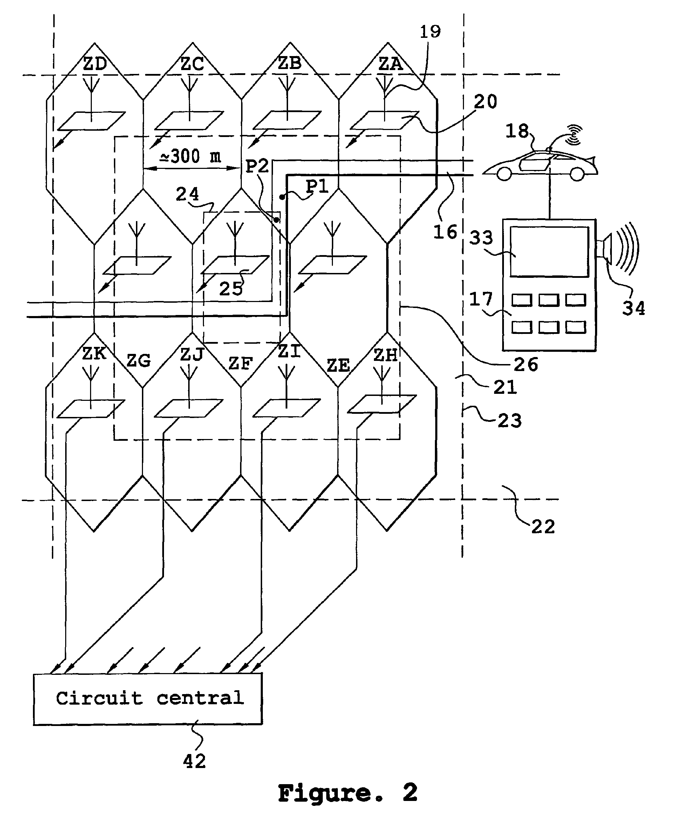

Les figures 1a à 1e montrent un rappel des signaux qui peuvent être échangés entre un téléphone mobile et une station de base, notamment sur un réseau de type GSM. La figure 2 montre, d'une manière schématique, une répartition géographique de stations de base sur un territoire. Sur la figure 1a on indique que, pour une voie fréquentielle, un multiplexage dans le temps est organisé entre plusieurs canaux. Dans un exemple particulier, dans une trame temporelle de 4,6 millisecondes, on peut ainsi répartir 8 fenêtres C1, C2 à C8 de 577 microsecondes successives. Pour une voie fréquentielle, ce multiplexage temporel permet d'assurer jusqu'à 8 communications.

Sur la figure 1b, on a montré qu'une station de base était capable d'émettre, par rapport à une bande de fréquence définie, sur une sous-porteuse F1 à F124 ou autre. Il y a en effet 124 canaux dans la norme GSM 900 standard, 174 dans la norme GSM 900 étendue, et environ 350 dans la norme DCS. En pratique, une station de base, pour une trame donnée, pourra émettre simultanément dans huit bandes de fréquence différentes choisies parmi les 124. A une trame suivante, un autre arrangement de huit fréquences parmi 124 peut être retenu. Une telle organisation combinée avec le multiplexage temporel permet d'assurer 64 communications téléphoniques simultanées pour une seule station de base.

En plus de l'échange des messages utiles aux utilisateurs, la station de base échange avec le téléphone mobile des signaux de signalisation. Ces signaux de signalisation servent à paramétrer le fonctionnement du téléphone mobile et/ou de la station de base elle-même en fonction des conditions particulières de communication. Ces signaux de signalisation sont envoyés sur un canal de radiodiffusion (dit Broadcasting, CB). Selon les protocoles, ce canal de radiodiffusion pourrait être aménagé dans une des fenêtres d'une trame, ou il peut occuper d'une manière préférentielle une des fréquences parmi les 124 utiles. En variante, il peut se situer hors bande.

Les messages de signalisation peuvent être émis, figure 1c, de la station de base en direction du mobile ou, figure 1d, du mobile vers la station de base. Les messages de signalisation comportent plusieurs parties codées. Les messages des figures 1c et 1d sont codés selon des protocoles définis à l'avance, où la position des bits dans le message renseigne sur les indications à transmettre. Une première partie 1 du message émis par la station de base concerne l'identification du mobile à qui est destiné le message. Une deuxième partie 2 concerne une identification de zone, dite LAI (Location Aera Identity). Cette identification représente la zone où se situe la station de base. Une troisième partie 3 conceme une assignation en fréquence que le téléphone mobile doit respecter. En pratique, il s'agit du choix d'une des sous-porteuses F1 à F124. Une quatrième partie 4 de ce message comporte une assignation de puissance d'émission. En effet, selon que le mobile se trouve plus ou moins loin de la station de base, il est nécessaire que la puissance de son émission soit adaptée. Ceci a pour effet, d'une part d'épargner les réserves énergétiques du téléphone mobile, et d'autre part de ne pas engendrer de bruits électromagnétiques inutiles pour des communications avoisinantes.

Une cinquième partie 5 concerne une assignation de synchronisation. Ainsi, par rapport à une date t0 de synchronisation (figure 1a), l'assignation de synchronisation indique au téléphone mobile quelle est la fenêtre dans la trame qui lui est attribuée.

Bien d'autres parties du message sont envisageables, notamment une partie 6 de signalisation relative à la communication elle-même. C'est ainsi qu'on peut prévenir, par un affichage sur l'écran de son téléphone mobile, un utilisateur de ce que sa boîte vocale est chargée avec un message qu'il aurait préalablement reçu.

Lorsqu'un téléphone mobile de type GSM standard est en veille, il écoute certains canaux logiques du réseau (combinaison de fréquence, de fenêtre temporelle et de numéro de trame). Ces canaux diffusent périodiquement certaines informations, telles que LAI, interdiction de cellules. Certaines de ces informations diffusées périodiquement contiennent des informations d'appel, qui signifient en quelque sorte "téléphone n° XXX dont on ne sait pas où il est dans la LAI, doit entrer en communication avec le réseau." Les messages de gestion de la puissance d'émission ne sont envoyés qu'en cours de communication. Mais il peut y avoir un message de mode par défaut qui dit à quelle puissance il faut à priori commencer à émettre. De même l'assignation d'une fenêtre temporelle peut ne se faire qu'en mode dédié (i.e. communication établie).

En résumé, dans l'invention, il faut ajouter l'information de neutralisation au flux des informations régulièrement diffusées, avec une périodicité suffisante pour qu'une bande de protection qui entoure la zone d'interdiction n'ait pas à être trop large. Il y a ainsi trois zones à prendre en considération dans un sens zone ouverte vers zone contrainte : une première zone où tout est normalement permis, une deuxième zone où l'état du téléphone est incertain et dans laquelle on souhaite qu'il soit informé des contraintes à gérer, ou détecter. Et une troisième zone où la contrainte de neutralité s'exerce. Dans ce cas, la deuxième zone doit être de dimension correspondant à la rapidité des moyens d'intervention, un sas refusant d'ouvrir sa deuxième porte étant un exemple.

Selon l'invention, on insérera dans la partie 6 ou une autre, ou bien on ajoutera une partie 7 supplémentaire, pour représenter un message de neutralisation. En pratique, autant un message de neutralisation est essentiel dans l'invention, autant un message de réactivation (contraire au message de neutralisation), constituera un perfectionnement de l'invention. Le message de neutralisation 7 peut être constitué par un seul bit : un bit à l'état zéro constituant un ordre de neutralisation, un bit à l'état 1 représentant une activation.

Sur la figure 1d, on a montré d'une même manière symbolique un message de signalisation envoyé par le téléphone mobile à la station de base. Ce message comporte une partie 8 d'identification du téléphone mobile, pour que la station de base puisse reconnaître l'émetteur du message. Il comporte d'autres parties 9 à 11 par lesquelles le téléphone mobile indique les niveaux de signal qu'il reçoit des différentes stations de base. Ceci permet à un central téléphonique, d'organiser préférentiellement le trafic avec le téléphone mobile à partir d'une station de base plutôt qu'une autre : celle que ce mobile reçoit le mieux. Les rapports de mesure de puissance ne sont envoyés au réseau que lorsque le téléphone mobile est en communication établie, pour permettre au réseau de lui assigner une cellule de travail, ou d'en forcer le changement.

Dans l'invention, lorsque le téléphone mobile appliquera l'ordre de neutralisation, bien entendu il n'émettra plus régulièrement les messages de la figure 1d. En outre, les mises à jour périodiques de localisation par lesquelles le téléphone mobile se manifeste périodiquement au réseau, même s'il n'a pas changé de zone LAI, seront désactivées jusqu'à réactivation complète du poste.

Le téléphone mobile peut renvoyer également d'autres types d'informations, dont on verra l'utilisation plus loin, notamment relatives à la classe du téléphone mobile lui-même, ou relatives à la personnalité de l'utilisateur. En correspondance à l'ordre 7 de neutralisation, le téléphone mobile pourra émettre, dans son message de signalisation, une partie 13 de son message constituant un acquit, montrant par-là qu'il a reçu le message de neutralisation (et qu'il en a ou qu'il va en tenir compte). Cet acquit ne peut être émis de préférence que dans la ceinture de protection, la deuxième zone. Le message d'inhibition est également diffusé dans la troisième zone, la zone interdite, autant que possible (sauf s'il s'agit de garder un environnement électromagnétiquement pur). Dans la troisième zone, on cherche de préférence à éviter de faire passer le téléphone mobile en émission.

La figure le montre une variante de mise en oeuvre du procédé de l'invention, dans laquelle une station de base émet régulièrement, par exemple toutes les secondes, un message de neutralisation sous la forme d'un message de signalisation. Le message de neutralisation comportera dans ce cas, d'une part un ordre 14 de neutralisation (constitué éventuellement par le seul fait que le message de neutralisation existe). Il comportera d'autre part des paramètres 15 de neutralisation, interprétables par le téléphone mobile pour que ce dernier limite sa communication en conséquence.

Pour l'instant, on a commencé à expliquer le fonctionnement de l'invention dans le cas où les téléphones mobiles seraient équipés du perfectionnement de l'invention et seraient capables de réagir à l'ordre de neutralisation. Par la suite, on expliquera comment l'invention peut être adaptée aux téléphones mobiles existants, qui bien entendu n'en sont pas munis. Dans ce cas, le message de neutralisation, au lieu d'être envoyé par la station de base uniquement au téléphone mobile, sera envoyé par la station de base, en plus ou à la place, à un central de communications téléphoniques afin que celui-ci gère la communication en conséquence.

La figure 2 montre, d'une manière schématique, un cheminement emprunté par un téléphone mobile 17, par exemple porté dans un véhicule 18, au travers de zones cellulaires ZA à ZK. La taille de ces zones cellulaires qui est indiquée comme pouvant être de l'ordre de 300 mètres, est en fait dictée par les conditions de propagation des signaux radioélectriques émis par les antennes telles que 19 des stations de base 20 qui gouvernent chacune des zones cellulaires respectivement. Le diamètre maximal d'une cellule est de l'ordre de 30 Km. Mais d'autres cellules pourraient être bien plus petites que 300 m.

D'une manière connue, les émissions d'une station de base 20 sont diffusées avec des gammes de fréquence différentes des émissions des stations de base voisines afin de ne pas perturber les signaux. Les stations de base des zones ZA à ZK sont comprises dans une zone LAI 21 dont l'identification est différente d'une autre zone LAI 22 voisine. Un téléphone mobile qui franchit la frontière 23 entre deux zones 21 et 22, est à l'origine d'une demande d'allocation de communication avec une autre zone LAI. Cette demande d'allocation LAI permet à un central téléphonique de préorienter les signaux à destination du téléphone mobile sur l'ensemble des cellules ZA à ZK qui vont l'accueillir.

On a représenté sur le cheminement 16 une zone 24 (globalement correspondante à la zone cellulaire ZF) dans laquelle, pour les raisons indiquées ci-dessus, il est nécessaire de neutraliser les émissions ou les réceptions ou limiter les deux pour le téléphone mobile 17.

Selon l'invention, la station de base 25 qui gouverne les émissions et réceptions dans la zone ZF, va émettre un message de neutralisation, c'est à dire un message de signalisation selon la figure 1c qui comporte en zone 7 un ordre de neutralisation des téléphones mobiles.

On a également montré sur la figure 2, une frontière 26 dans laquelle rayonnent des stations de base qui doivent émettre un ordre d'activation ou de réactivation des téléphones mobiles qui auraient été neutralisés. Ainsi, sur le cheminement 16, le téléphone mobile va d'abord recevoir un signal d'activation. Il ne va rien se passer pour lui puisque le téléphone mobile est déjà activé étant en provenance d'une zone où il n'a pas été désactivé. Au franchissement de la frontière 24, le téléphone mobile va être neutralisé. Il va être neutralisé jusqu'au franchissement à nouveau de la frontière 26 dans la zone ZG où ce poste se remettra à émettre et à recevoir sans limitation.

Le schéma représenté sur la figure 2 montre qu'il est simple d'organiser, pour une visite solennelle, une neutralisation, éventuellement une neutralisation progressive dans le temps et dans l'espace, de certaines zones géographiques au fur et à mesure de l'avancement d'un cortège officiel.

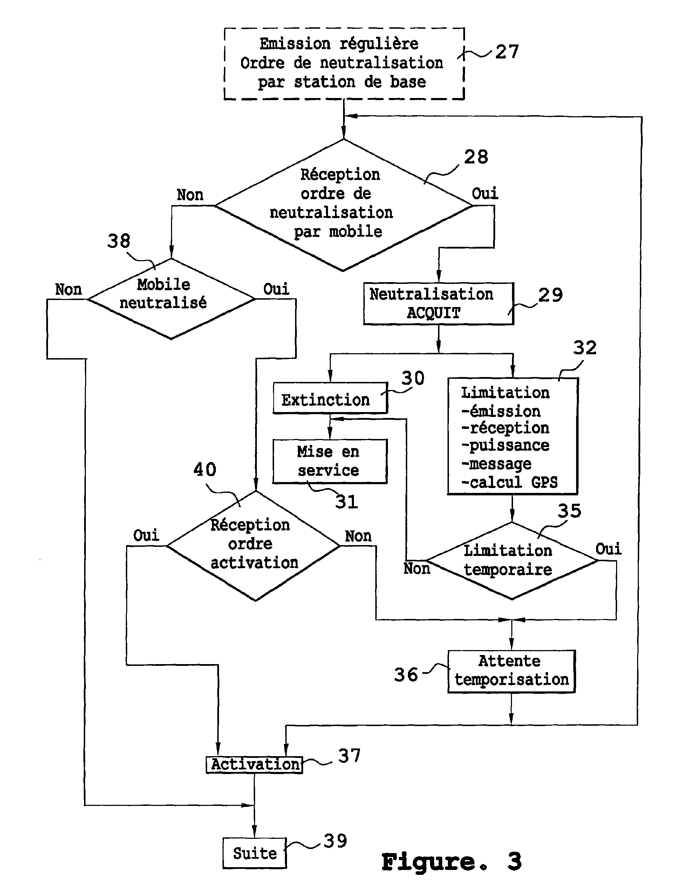

La figure 3 montre un mode de fonctionnement préféré d'un téléphone mobile muni de moyens pour mettre en oeuvre le procédé de l'invention. Au cours de son mouvement, au franchissement de la frontière 24, le téléphone mobile reçoit les émissions régulières 27 d'une station de base de neutralisation, par exemple de la station de base 25.

Soit ce message de neutralisation est reçu comme une interruption d'un programme d'un microprocesseur du téléphone mobile 17, soit le microprocesseur de ce téléphone mobile effectue cycliquement un test 28 pour savoir s'il a reçu un tel ordre de neutralisation. Les deux situations sont équivalentes. Au cours d'une opération 29, ultérieure au test 28 ou à l'interruption, le téléphone mobile organise sa neutralisation. Par exemple, il peut envoyer un acquit 13 (figure 1d) à la station de base en réponse à une demande explicite du réseau d'envoyer un tel acquit. Ceci signifie que la zone où le téléphone mobile se trouve le tolère encore. Il peut être ainsi dans la deuxième zone vue plus haut. La neutralisation peut prendre plusieurs formes. Selon une première forme, définitive 30, le téléphone mobile est tout simplement éteint. Il ne pourra être remis en service que par une mise en service positive 31 effectuée manuellement par l'utilisateur. Dans ce cas, au démarrage, le téléphone vérifie que le réseau auquel il est affilié, ou mieux encore qu'aucun des réseaux possibles n'émet d'avis d'interdiction d'émission dans la zone où il se trouve, avant toute mise à jour de localisation. Normalement en effet, un téléphone qui se réveille annonce au réseau sa présence, comme il annonce au réseau qu'il s'éteint. Ce qui permet des bascules plus rapide sur boîte vocale par exemple.

Soit la neutralisation prendra la forme d'une limitation 32 du fonctionnement du téléphone mobile. La limitation 32 pourra concerner essentiellement l'émission ou la réception. Dans ce cas le circuit d'émission (ou de réception) sera neutralisé. Il est néanmoins possible d'envisager d'autres formes de limitation. La nature de la limitation est précisée dans la partie 15 du message envoyé par la station de base. Les limitations préconisées à l'étape 32 peuvent être cumulatives ou uniques.

Par exemple, si on se situe dans une zone antidéflagrante, on pourra imposer une limitation de puissance d'émission à une fraction de la puissance nominale d'émission du téléphone mobile. Par exemple, cette fraction pourra être 1/4 ou 1/16^{ème}. Dans ces conditions, soit cette fraction de puissance émise est encore suffisante pour que la communication du téléphone mobile (ou sa mise en veille active) soit encore assurée. Dans ce cas l'utilisateur ne se rend même pas compte de son passage dans une zone neutralisée. Soit, cette puissance est insuffisante pour assurer une communication et celle-ci est brouillée. Donc l'utilisateur ne peut pas se servir de son téléphone mobile.

La limitation pourra aussi prendre la forme d'une information. Un message sera ainsi transmis à l'utilisateur. Ce message sera par exemple affiché sur un écran 33 du téléphone mobile au même titre que les messages de type connu. Ou bien encore, ce message sera un message audible, diffusé par un haut-parleur 34 du téléphone mobile. Ce message peut être un message en clair préenregistré ou non dans le téléphone mobile et indiquant la nature du phénomène "NEUTRALISATION DE ZONE" ou bien être constitué d'un message de brouillage, un bip sonore par exemple.

La limitation pourra être également l'élaboration d'une condition de fonctionnement du téléphone mobile. Parmi les conditions que l'on verra plus loin, il peut y avoir des conditions relatives à la situation du téléphone mobile. Dans ce cas, un calcul avec un positionnement par exemple grâce au système GPS pourra être entrepris par le microprocesseur du téléphone mobile. Ou bien, la limitation tiendra compte de la classe du téléphone mobile lui-même. S'il est un téléphone mobile antidéflagrant, il n'y a pas de raison d'en empêcher les émissions dans les zones à surveillance antidéflagrante. Soit, la limitation sera relative à la personnalité de l'utilisateur. Il est concevable ainsi que les pompiers et la police puissent jouir d'un moyen de passer outre les limitations d'émission - réception ou que, pour un utilisateur ordinaire, seuls les appels d'urgence ou de certaines classes de numéro (service de sécurité local) restent permis.

Par un test 35, le microprocesseur du téléphone mobile 17 mesurera en outre le caractère éventuellement temporaire de la limitation. Si la limitation n'est pas une limitation temporaire, la remise en service complète ne pourra se faire que par une intervention manuelle de l'opérateur à une étape 31. La mise en service dans ce cas, visera à corriger la limitation de l'étape 32 au lieu de remédier à l'extinction 30. Si la limitation est temporaire, le microprocesseur du téléphone mobile attendra alors dans une étape 36 une durée correspondant à la durée de temporisation. A l'issue de cette durée, deux fonctionnements sont possibles. Soit, l'activation sera automatique et sera produite par une opération 37. Soit, cette activation ne sera pas automatique et le téléphone mobile devra tester régulièrement le fait qu'il continue à recevoir, selon le test 28, des ordres de neutralisation ou non. Le choix entre ces deux solutions est sur l'initiative de l'opérateur. Eventuellement, ce choix fait partie des paramétrages 15 de l'ordre de neutralisation.

Autrement dit, sur le cheminement 16, si la temporisation est par exemple de l'ordre de 10 minutes, et que le téléphone mobile n'a pas encore franchi la totalité de la zone circonscrite par la frontière 24, le microprocesseur tournera dans la boucle des instructions 28 à 36. Dès qu'il quittera la zone circonscrite par la frontière 24, le téléphone mobile ne recevra plus l'ordre de neutralisation émis par la station de base 25. On peut prévoir dans ce cas, compte tenu de la régularité des émissions des messages de neutralisation (figure 1e), d'attendre pour le test 28 une durée égale à une fois et demie ou deux fois la période des émissions régulières du message de neutralisation. A l'issue d'une telle attente sans réception du message de neutralisation, le téléphone mobile considère qu'il ne reçoit plus cet ordre. Dans ce cas, on lance dans le téléphone mobile, un test 38 par lequel on cherche à savoir si le téléphone mobile est dans un état neutralisé ou non.

Dans le cas présent, tant qu'il est dans la zone ZA, il ne reçoit, d'une part, pas encore d'ordre de neutralisation. Il n'est d'autre part pas neutralisé. Dans ces conditions, le fonctionnement du téléphone mobile n'est pas altéré et une suite 39 des opérations normales se déroule sans difficulté. Par contre, si comme cela vient d'être décrit, le téléphone mobile a franchi la zone circonscrite par la frontière 24, il a été neutralisé. Dans ce cas, on peut conditionner au cours d'un test 40 son fonctionnement à la réception d'un ordre d'activation. Par exemple, cet ordre d'activation est reçu lorsque le mobile franchit la frontière 26 puisque toutes les stations de base situées sur cette frontière émettent l'ordre d'activation. Dans ce cas, le téléphone mobile reçoit l'ordre d'activation, il s'active au cours de l'opération 37 et peut lancer la suite 39 normale de ses opérations. Par contre, tant qu'il ne reçoit pas cette activation, l'état du téléphone mobile retourne à la temporisation 36 et un autre cycle recommence.

Un ordre d'activation peut être un ordre de neutralisation non neutralisant reçu correctement (l'information en zone 7 est par exemple 0). Ceci permet de distinguer l'absence de réception d'ordre de neutralisation qui pourrait être due à une absence de réseau, par exemple dans une zone qui doit rester pure de tout rayonnement aux fréquences concernés, de la réception correcte d'un message n'interdisant pas d'émettre.

Dans le cas où on serait capable d'organiser une frontière 26 et d'équiper les stations de base périphériques avec émission d'un ordre d'activation, le schéma décrit ci-dessus sera préféré. Dans ce cas, l'attente de temporisation pourra être de l'ordre de 10 minutes. Par contre, s'il est trop difficile d'intervenir sur toutes les stations de base périphériques et qu'on veut seulement modifier la station de base 25, l'attente de temporisation pourra être plus longue, dans un exemple elle durera 24 heures.

Un mobile après avoir reçu l'ordre de se taire ne doit bien entendu plus émettre aucun appel. Mais dans le sens descendant, deux attitudes peuvent être imposées par le réseau au téléphone mobile. Soit le téléphone mobile reste à l'écoute, mais alors ses circuits électroniques ne sont pas complètement au repos. Même si la partie puissance ne travaille pas, le téléphone mobile consomme un peu plus que s'il se contente de scruter périodiquement le réseau pour déterminer s'il est sorti de la zone d'interdiction. Soit le téléphone mobile se ferme aux appels pouvant venir du réseau. La première attitude peut être utile pour diffuser des messages d'alerte, dont la priorité excède le besoin d'absence d'émission.

Tel que le système vient d'être décrit, il correspond essentiellement à l'utilisation de téléphones mobiles munis d'un perfectionnement de fonctionnement, représenté sur la figure 3, pour accueillir le procédé de l'invention.

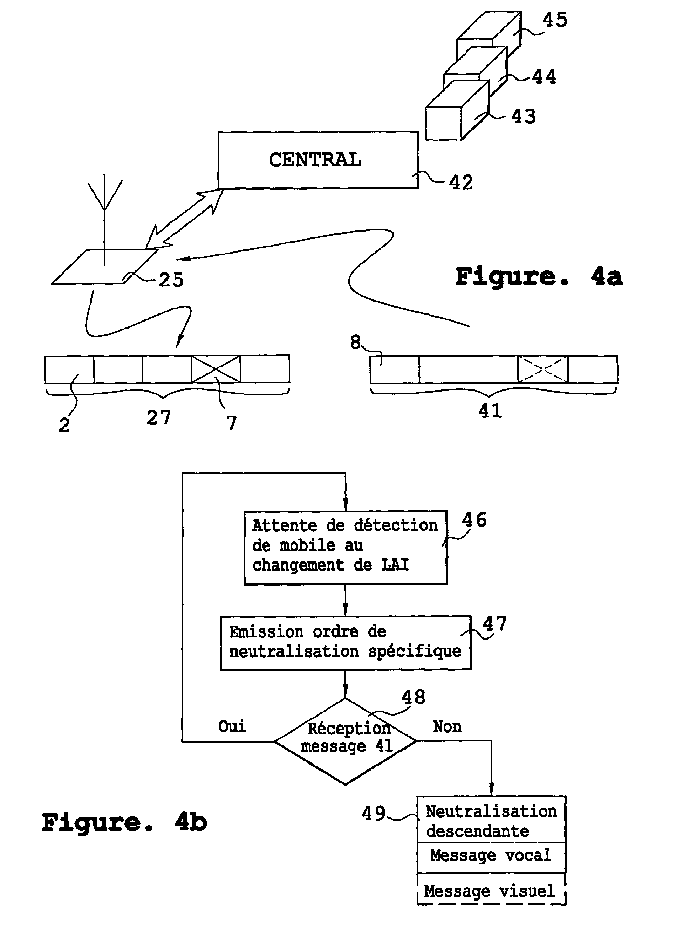

Par contre, figures 4a et 4b, il est possible d'envisager le fonctionnement des téléphones mobiles qui ne sont pas munis du perfectionnement de l'invention, parce qu'il s'agit de téléphones mobiles anciens.

La figure 4a montre une station de base 25 émettant un message de neutralisation 27 à destination d'un téléphone mobile et recevant, éventuellement, un message d'acquit 41 en provenance de ce téléphone mobile. Si ce message 41 est reçu, la station de base 25 le transmet à un central téléphonique 42. Le central 42 oriente de toute façon, que ce message 41 soit reçu ou non, vers des boîtes vocales 43 à 45 tous les messages provenant d'interlocuteurs qui cherchent à joindre les téléphones mobiles qui ont été neutralisés et dont on a repéré l'identification par la partie 8 de leur message de signalisation envoyée au moment ou à cause de l'acquit.

Par contre, lorsque le téléphone mobile n'est pas équipé avec le perfectionnement, il ne comprend tout simplement pas la partie 7 de l'ordre 27 de neutralisation. En conséquence, le téléphone mobile ne va rien faire. Compte tenu par ailleurs de ce que le téléphone mobile n'est pas exactement localisé à l'intérieur de la zone LAI 21, il peut même n'être pas possible, à priori, de savoir si ce téléphone mobile se situe dans une zone ZA pour laquelle son fonctionnement est autorisé ou dans la zone ZF pour laquelle il serait interdit.

Aussi, on modifie dans l'invention une des parties du message de signalisation 27 de telle façon que cette modification entraîne de la part du téléphone mobile qui la reçoit, même un ancien téléphone mobile, un message de signalisation montrant qu'il a détecté cette modification. De préférence, on modifiera l'identification LAI en zone 2 de manière à ce que le téléphone mobile agisse comme s'il repérait le franchissement d'une frontière 23 (figure 2). Dans ces conditions, le téléphone mobile va envoyer obligatoirement un message 41. Le message 41 envoyé comportera ou ne comportera pas un acquit selon que le téléphone mobile concerné est ou n'est pas muni du perfectionnement de l'invention. Par contre, on va pouvoir identifier ce téléphone mobile. En effet dans la partie 8 de son message, il se signale. Le message 41 est obligatoire car il respecte le protocole GSM.

De préférence donc, si l'émission du réseau est perceptible dans la zone interdite, elle doit donc être couverte dans l'invention par une identification LAI propre. Par ailleurs, certains moyens sont définis qui permettent de localiser avec précision un mobile, la localisation étant faite par le réseau. Dans ce cas, le réseau, suivant les coordonnées de chaque mobile, adressent à ceux qui s'approchent trop dangereusement de la zone interdite un message d'interdiction. Par opposition à un système de type GPS, le mobile n'a pas besoin, lui, de savoir où il se trouve.

Dans ces conditions, le central 42 ou la station de base 25 qui émet un signal de signalisation 27, se met dans une phase 46 d'attente de détection par un téléphone mobile de l'information de changement de zone LAI. Lorsqu'elle reçoit un message 41 constatant ce changement de zone LAI, la station de base émet au cours d'une phase 47, un ordre spécifique de neutralisation. Cet ordre spécifique de neutralisation peut être spécifique au mobile qui s'est identifié, et dont on connaît l'identification par la partie 8 de son message 41. Cet ordre peut être envoyé au téléphone mobile, ou au central 42.

Au cours d'un test 48, la station de base 25 vérifie qu'elle a reçu le message 41 en provenance du téléphone mobile. Si elle le reçoit, la neutralisation du téléphone mobile sera à la fois montante (le téléphone mobile n'émettra plus), et descendante (la station de base n'émettra plus de message) à direction spécifique de ce téléphone mobile et orientera les messages reçus vers les boîtes vocales 43 à 45. Par contre, si le message 41 n'est pas reçu, la neutralisation ne pourra pas être montante, elle ne pourra être que descendante. Dans ce cas, tout en empêchant la partie descendante de la communication de se propager, la station de base pourra y substituer un message 49 vocal (une interdiction en clair, ou un bip sonore) ou un message visuel affiché sur l'écran 33 du téléphone mobile 17. On peut espérer dans ces conditions que le civisme de l'utilisateur sera utilement encouragé.

En variante un téléphone mobile se met dans un mode où il gère une communication dans le sens descendant seulement. Ceci permet au réseau de diffuser des alertes en clair, en toutes les langues, sans faire émettre les mobiles. Dans ce mode, l'émission de la station de base est en boucle ouverte. Elle ne reçoit pas d'information du mobile qui permette de le gérer.

Il est à noter que la requête 27 en message de signalisation 41, envoyée par la station de base au téléphone mobile a pour but de le neutraliser. Elle est donc en elle-même ce message de neutralisation. L'ordre de neutralisation peut néanmoins être ultérieur à la requête en LAI, et être envoyé au cours d'un autre message de la station de base au téléphone mobile par exemple. Dans ce dernier cas, il n'est envoyé que si le téléphone mobile n'est pas prioritaire (pompiers, police) ou autorisé (antidéflagrant). Le fait que le téléphone mobile appartienne à une classe prioritaire peut être ainsi pris en compte soit dans les paramètres 15 qui épargnent les téléphones mobiles ou les utilisateurs prioritaires, soit dans l'ordre ultérieur qui tient compte, à partir d'une table de correspondance préenregistrée de la qualité du téléphone mobile ou de l'utilisation déduite de la réponse.

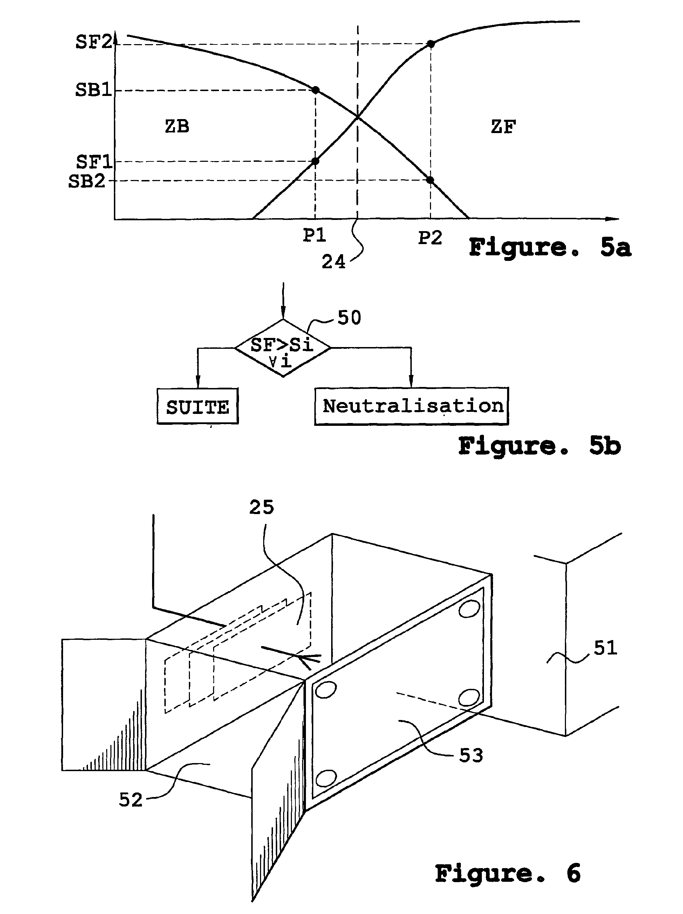

Sur la figure 5a, on a représenté schématiquement le caractère conditionnel de la limitation de l'opération 32. Le téléphone mobile se déplacera ainsi progressivement de part et d'autre de la frontière 24, d'une position P1 à une position P2. Dans la position P1, il reçoit un signal SB1 provenant de la zone ZB avec un niveau plus fort qu'un signal SF1 provenant de la zone ZF. Par contre, à la position P2 le signal SF2 est devenu plus fort que le signal SB2. On pourra prévoir alors dans le programme de fonctionnement du téléphone mobile, un test 50 au cours duquel l'ordre de neutralisation ne sera pris en compte que si le signal SF qui provient de la station de base neutralisante 25 est plus fort que n'importe lequel des signaux qui proviennent de n'importe quelle autre station de base voisine. Dans ce cas, on sera assuré que le téléphone mobile a bien franchi la frontière 24. D'autres conditions sont également possibles et le test 50 peut correspondre à la vérification de ce que le téléphone mobile n'est pas un téléphone mobile détenu par des personnes autorisées (pompiers, police) ou bien un poste téléphonique autorisé en lui-même (poste téléphonique mobile antidéflagrant).

La figure 6 montre un exemple particulièrement simple, de mise en oeuvre du procédé de l'invention. Cette mise en oeuvre est destinée aux lieux publics. Par exemple, un lieu public 51, une salle théâtre, une salle de restaurant ou autre, est accessible par un sas d'entrée 52. A l'intérieur de ce sas 52, est disposée une station de base 25 de neutralisation. Cette station de base va neutraliser tous les téléphones mobiles qui passent dans le sas. Dans ce cas, la temporisation qui peut être imposée à ces téléphones mobiles par la partie 15 du message de neutralisation (figure 1e), sera par exemple de 4 heures. De manière à ce que la station de base 25 ne nuise pas au fonctionnement des stations de base environnantes, le sas 52 sera blindé par des plaques 53 réparties sur toute sa surface extérieure pour en faire une cage de Faraday. En outre, étant donné que plusieurs opérateurs sont susceptibles d'acheminer des messages sur tout un territoire, il y aura à l'intérieur du sas 52, autant de stations de base 25 qu'il y a d'opérateurs différents. Un sas de sortie, non représenté mais différent du sas d'entrée, permet de réactiver tous les téléphones mobiles qui ont été désactivés.

En variante, un opérateur distinct de celui qui gère la station 25 peut donner ordre aux téléphones mobiles qui sont dans l'environnement de la station de base 25, et qui trafiquent avec lui, d'écouter la station de base 25, et de tenir compte des ordres de neutralisation qu'elle émet.

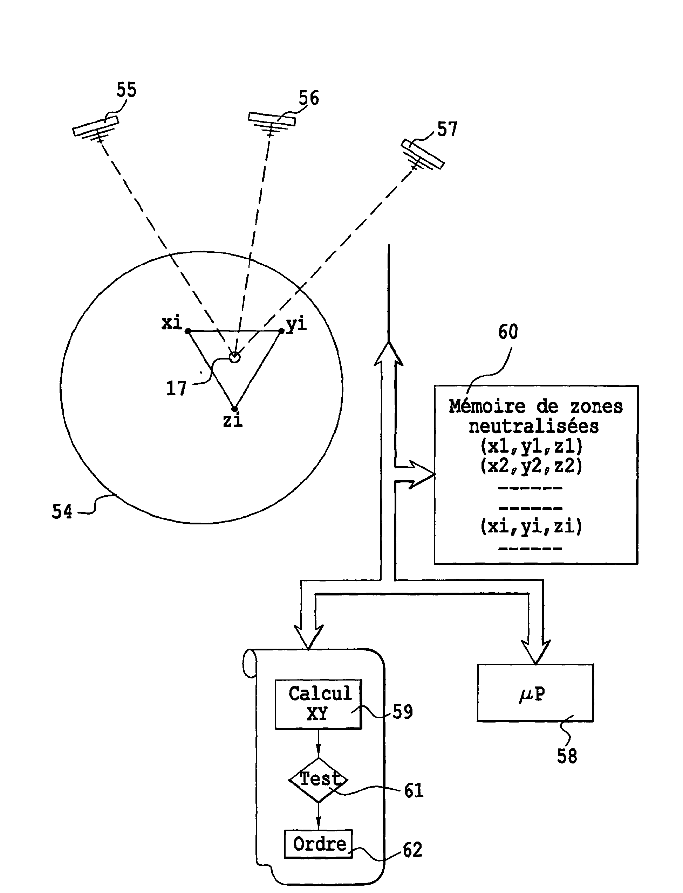

La figure 7 montre un perfectionnement de l'invention dans lequel le téléphone mobile est muni, en plus d'une possibilité de positionnement. La surface de la terre 54 reçoit des émissions en provenance de satellites 55 à 57. Ces émissions sont captées par l'antenne du téléphone mobile 17. Le microprocesseur 58 de ce téléphone mobile est capable, par un calcul cyclique 59, de déterminer par goniométrie la position en longitude et en latitude, ou autre système de référence, du téléphone mobile 17.

Dans ce cas, le message de neutralisation émis par une station de base, pourra ne comporter qu'une délimitation de la zone protégée. Dans un exemple, cette zone protégée sera un triangle dont les coordonnées des sommets xi yi zi sont transmises dans le message de neutralisation. Le téléphone mobile enregistre alors, dans une mémoire 60, du type premier rentré - premier sorti (FIFO) les triplets successifs de coordonnées délimitant des zones de neutralisation qu'il a reçues des dernières différentes stations de base neutralisantes qu'il a rencontrées depuis sa première mise en service (dans la limite de la capacité de la mémoire 60). Le téléphone mobile effectue alors d'une manière cyclique, par exemple toutes les secondes, un test 61 pour savoir si des coordonnées XY qu'il a déduites du calcul 59, sont comprises dans une des zones délimitées par les sommets xi yi zi contenus dans sa mémoire 60. Dans ce cas, lorsque le téléphone mobile franchit la frontière 24, celle-ci est très précisément identifiée. Par le test 61 le téléphone mobile peut se couper, ou limiter son fonctionnement, tout seul. Dans ce cas, il n'est pas vraiment nécessaire que l'information xi yi zi de zones neutralisées soit émise par la station de base 25. Elle peut être émise par n'importe quelle autre station de base, par exemple par la station de base 20 si l'on est sûr que le mobile doit passer par cette station de base avant de rejoindre la zone ZF. Il peut y avoir aussi plusieurs stations de base neutralisantes qui gouvernent une même zone ZF à neutraliser.

## Revendications

1. Procédé de gestion géographique du trafic dans un réseau (ZA-ZK, 42) téléphonique entre des téléphones mobiles (17) et des stations (20, 25) de base, dans lequel une station (25) de base neutralisante gouverne une zone (ZF) géographique et envoie un message (7) de neutralisation à un téléphone mobile en relation radioélectrique avec cette station de base, de sorte que l'on dirige les appels entrants destinés aux téléphones mobiles neutralisés sur une boîte vocale (43, 45) pendant la période de neutralisation,
**caractérisé en ce que**
- la station de base neutralisante envoie le message de neutralisation au téléphone mobile si, dans un message de signalisation reçu de ce téléphone mobile, des conditions de test sur un identifiant sont réunies pour que ce message lui soit envoyé,
et **en ce que** :
- on limite l'émission, et/ou la réception, et/ou une autre fonction du téléphone mobile, cette limitation étant fonction de la classe du téléphone mobile lui-même ou relative à la personnalité de l'utilisateur.

2. Procédé de gestion géographique du trafic dans un réseau (ZA-ZK, 42) téléphonique entre des téléphones mobiles (17) et des stations (20, 25) de base, dans lequel une station (25) de base neutralisante gouverne une zone (ZF) géographique et envoie un message (7) de neutralisation à un téléphone mobile en relation radioélectrique avec cette station de base, de sorte que le message de neutralisation (7) est envoyé aux téléphones mobiles et en ce que les téléphones mobiles qui reçoivent ce message de neutralisation limitent (32) leur échange avec le réseau aussi longtemps qu'ils reçoivent ce message,
**caractérisé en ce que**
- la station de base neutralisante envoie le message de neutralisation au téléphone mobile si, dans un message de signalisation reçu de ce téléphone mobile, des conditions de test sur un identifiant sont réunies pour que ce message lui soit envoyé,
et **en ce que** :
- la station de base neutralisante détecte (41) la présence d'un téléphone mobile, le message de neutralisation étant alors envoyé à un circuit central (42) de gestion des communications avec ce téléphone mobile, et **en ce que** ce circuit central limite les échanges avec ce téléphone mobile.
et **en ce que**
- on limite l'émission, et ou la réception, et ou une autre fonction du téléphone mobile, cette limitation étant fonction de la classe du téléphone mobile lui-même ou relative à la personnalité de l'utilisateur.

3. Procédé selon l'une des revendications 1 à 2, **caractérisé en ce que** le message de neutralisation (7) est envoyé aux téléphones mobiles et **en ce que** les téléphones mobiles qui reçoivent ce message de neutralisation limitent (32) leur échange avec le réseau aussi longtemps qu'ils reçoivent ce message.

4. Procédé selon l'une des revendications 1 à 3, **caractérisé en ce que** le message de neutralisation avertit (34) le téléphone mobile, par exemple par une sonnerie, un signal lumineux, un message à l'écran, ou un message vocal, préenregistré ou non dans le téléphone mobile.

5. Procédé selon l'une des revendications 1 à 4, **caractérisé en ce que** le message de neutralisation est envoyé régulièrement (27).

6. Procédé selon l'une des revendications 1 à 5, **caractérisé en ce que** le message de neutralisation comporte un paramétrage (15) de limitation, notamment un paramétrage propre à une classe d'utilisation et ou à une classe de matériel.

7. Procédé selon l'une des revendications 1 à 6, **caractérisé en ce que** les conditions comportent une mesure comparative de niveaux (SF1, SB1) des signaux reçus par le téléphone mobile et provenant d'autres stations de base voisines de la station de base neutralisante.

8. Procédé selon l'une des revendications 1 à 7, **caractérisé en ce qu'**on provoque une neutralisation irréversible (30), le téléphone mobile devant être réarmé à la main par l'utilisateur.

9. Procédé selon l'une des revendications 1 à 8, **caractérisé en ce que** la neutralisation est temporisée (36).

10. Procédé selon la revendication 10, **caractérisé en ce que** la durée de temporisation est contenue (15) dans le message de neutralisation.

11. Procédé selon l'une des revendications 1 à 10, **caractérisé en ce que**
le message de neutralisation comporte une description géographique d'une zone de neutralisation, notamment une description géographique de type GPS (xi, yi, zi),
- le mobile repère (59) sa position géographique (XY) et la compare (61) à la description géographique reçue dans le message, et
- le mobile se limite s'il est dans une zone de neutralisation.

12. Procédé selon l'une des revendications 1 à 11, **caractérisé en ce que**
- le réseau mesure la position des mobiles téléphoniques, et
- le réseau adresse aux mobiles téléphoniques qui s'approchent de la zone géographique (ZF) un message de neutralisation.

13. Procédé selon l'une des revendications 1 à 12, **caractérisé en ce que**
- la station de base neutralisante envoie un message d'identification (LAI) de zone différente d'une identification de zone de ses voisines,
- le téléphone mobile envoie (41) à la station de base neutralisante un message de demande d'allocation de zone,
- la station de base émet le message de neutralisation en réponse à cette demande.

14. Procédé selon l'une des revendications 1 à 13, **caractérisé en ce que** le téléphone mobile se limite à l'écoute des messages descendants.

15. Procédé selon l'une des revendications 1 à 14, **caractérisé en ce qu'**au moment de sa mise en service le téléphone mobile vérifie que le réseau n'émet pas de message de neutralisation.

16. Dispositif de gestion géographique d'un réseau de téléphones mobiles, comportant des moyens (25, 55-57) pour émettre des messages de neutralisation de téléphones mobiles qui sont dans leur environnement, et dans les téléphones mobiles des moyens (28-39, 58-62) de limiter (32) leur trafic avec le réseau en fonction de la réception de ces messages, **caractérisé en ce que qu**'il comporte un sas de passage des téléphones mobile, le sas étant blindé et étant muni d'une station de base pour que le message de neutralisation soit le seul message reçu par les téléphones mobiles lors de leur passage dans le sas, de sorte que l'émission et/ou la réception, et/ou une autre fonction du téléphone mobile soit(ent) limitée(s) et que cette limitation soit fonction de la classe du téléphone mobile lui-même ou relative à la personnalité de l'utilisateur.

## Claims

1. A Method of geographical traffic management in a telephone network (ZA-ZK, 42) between mobile phones (17) and base stations (20, 25), in which a neutralising base station (25) governs a geographical zone (ZF) and sends a neutralisation message (7) to a mobile phone in radio-electric contact with this base station, in order that the incoming calls destined for the neutralised mobile phones are directed to a voice mailbox (43, 45) during the neutralisation period,
**characterised in that**
- the neutralising base station sends the neutralisation message to the mobile phone if, in a signalling message received from this mobile phone, the test conditions on an identifier are brought together so that the message is sent to it,
and **in that** :
the emission and/or reception and/or another function of the mobile phone is restricted, this restriction being dependant on the mobile phone's own type or being related to the user's personality.

2. A method of geographical traffic management in a telephone network (ZA-ZK, 42) between mobile phones (17) and base stations (20, 25), in which a neutralising base station (25) governs a geographical zone (ZF) and sends a neutralisation message (7) to a mobile phone in radio-electric contact with this base station, in order that the neutralisation message (7) is sent to the mobile phones and in that the mobile phones which receive this neutralisation message restrict (32) their exchange with the network for the duration of the period of receiving this message,
**characterised in that**
- the neutralising base station sends the neutralisation message to the mobile phone if, in a signalling message received from this mobile phone, the test conditions on an identifier are brought together so that the message is sent to it,
and **in that**:
- the neutralising base station detects (41) the presence of a mobile telephone, the neutralising message being therefore sent to a central circuit (42) for managing communications with this mobile phone, and **in that** said central circuit restricts the exchanges with this mobile phone,
and **in that**
- the emission and or the reception and or another function of the mobile phone is restricted, this restriction being dependant on the type of mobile phone itself or relating to the personality of the user.

3. A method according to one of claims 1 to 2, **characterised in that** the neutralisation message (7) is sent to the mobile phones and **in that** the mobile phones which receive this neutralisation message restrict (32) their exchange with the network for the duration of the period of receiving this message.

4. A method according to one of claims 1 to 3, **characterised in that** the neutralisation message informs (34) the mobile telephone, for example by a ring-tone, a light signal, an on-screen message or a voice message, pre-recorded or not, in the mobile phone.

5. A method according to one of claims 1 to 4, **characterised in that** the neutralisation message is regularly sent (27).

6. A method according to one of claims 1 to 5 **characterised in that** the neutralisation message comprises a restriction setting (15), in particular a setting belonging to a type of use or a type of material.

7. A method according to one of claims 1 to 6, **characterised in that** the conditions comprise a comparative measure of levels (SF1, SB1) of signals received by the mobile phone and coming from other neighbouring base stations of the neutralising base station.

8. A method according to one of claims 1 ot 7, **characterised in that** an irreversible neutralisation (30) is provoked, the mobile phone requiring manual reloading by the user.

9. A method according to one of claims 1 to 8, **characterised in that** the neutralisation is temporized (36).

10. A method according to claim 10, **characterised in that** the period of temporization is contained (15) in the neutralisation message.

11. A method according to one of claims 1 to 10, **characterised in that**
the neutralisation message comprises a geographical description of a neutralisation zone, in particular a geographical description of GPS type (xi, yi, zi),
- the mobile recognises (59) its geographical position (XY) and compares it (61) to the geographical description received in the message and
- the mobile restricts itself if it is in a neutralisation zone.

12. A method according to one of claims 1 to 11, **characterised in that**
- the network measures the position of the mobile phones , and
- the network sends a neutralisation message to mobile phones which are close to the geographical zone (ZF).

13. A method according to one of claims 1 to 12, **characterised in that**
- the neutralising base station sends a zone identification message (LAI) different from a zone identification of its neighbours,
- the mobile phone sends (41) a zone allocation request message to the neutralising base station,
- the base station emits the neutralisation message in response to this request.

14. A method according to one of claims 1 to 13, **characterised in that** the mobile phone restricts itself to listening to descending messages.

15. A method according to one of claims 1 to 14, **characterised in that**, at the moment when it is switched on, the mobile phone checks that the network is not emitting any neutralisation messages.

16. A geographical management device of a mobile phone network comprising means (25, 55-57) for emitting neutralisation messages to mobile phones which are in their environment, and in the mobile phones, means (28-39, 58-62) for restricting (32) their traffic with the network according to the reception of these messages, **characterised in that** it comprises a mobile phone airlock space, the airlock space being shielded and having a base station so that the neutralisation message is the only message received by the mobiles during their passage in the airlock, in order that the emission and/or reception, and/or another function of the mobile phone is restricted and that this restriction is dependant on the type of mobile phone itself or related to the personality of the user.

## Patentansprüche

1. Verfahren zum geografischen Management des Datenaustauschs in einem Telefonnetz (ZA-ZK, 42) zwischen Mobiltelefonen (17) und Basisstationen (20, 25), bei dem eine neutralisierende Basisstation (25) eine geografische Zone (ZF) steuert und eine Neutralisierungsnachricht (7) an ein Mobiltelefon sendet, das in funkelektrischer Verbindung mit dieser Basisstation steht, sodass die für die neutralisierten Mobiltelefone bestimmten eingehenden Anrufe während des Zeitraums der Neutralisierung in eine Mailbox (43, 45) umgeleitet werden,
**dadurch gekennzeichnet, dass**
- die neutralisierende Basisstation dem Mobiltelefon die Neutralisierungsnachricht sendet, wenn in einer Hinweisnachricht, die aus diesem Mobiltelefon empfangen wird, Testbedingungen hinsichtlich eines Benutzernamens erfüllt sind, die dafür sorgen, dass ihm diese Nachricht übermittelt wird,
und **dadurch**, dass:
- die Sendung und/ oder der Empfang und/ oder eine weitere Funktion des Mobiltelefons eingeschränkt wird, wobei diese Einschränkung von der Klasse des Mobiltelefons selbst, oder in Bezug auf die Benutzerpersönlichkeit abhängt.

2. Verfahren zum geografischen Management des Datenaustauschs in einem Telefonnetz (ZA-ZK, 42) zwischen Mobiltelefonen (17) und Basisstationen (20, 25), bei dem eine neutralisierende Basisstation (25) eine geografische Zone (ZF) steuert und eine Neutralisierungsnachricht (7) an ein Mobiltelefon sendet, das in funkelektrischer Verbindung mit dieser Basisstation steht, sodass die Neutralisierungsnachricht (7) an die Mobiltelefone gesendet wird, und diejenigen Mobiltelefone, die diese Neutralisierungsnachricht empfangen, ihren Datenaustausch mit dem Netz solange einschränken (32), wie sie diese Nachricht erhalten,
**dadurch gekennzeichnet, dass**
- die neutralisierende Basisstation dem Mobiltelefon die Neutralisierungsnachricht sendet, wenn in einer Hinweisnachricht, die aus diesem Mobiltelefon empfangen wird, Testbedingungen hinsichtlich eines Benutzernamens erfüllt sind, die dafür sorgen, dass ihm diese Nachricht übermittelt wird,
und **dadurch**, dass:
- die neutralisierende Basisstation das Vorhandensein eines Mobiltelefons erfasst (41), wodurch die Neutralisierungsnachricht an einen Zentralkreis (42) zur Verwaltung der Kommunikationen mit dem Mobiltelefon gesendet wird, und dass dieser Zentralkreis den Datenaustausch mit diesem Mobiltelefon einschränkt,
und **dadurch**, dass
- die Sendung und/ oder der Empfang und/ oder eine weitere Funktion des Mobiltelefons eingeschränkt wird, wobei diese Einschränkung von der Klasse des Mobiltelefons selbst, oder in Bezug auf die Benutzerpersönlichkeit abhängt.

3. Verfahren nach einem der Ansprüche 1 bis 2, **dadurch gekennzeichnet, dass** die Neutralisierungsnachricht (7) an die Mobiltelefone gesendet wird, und **dadurch**, dass diejenigen Mobiltelefone, die diese Neutralisierungsnachricht erhalten, ihren Datenaustausch mit dem Netz solange einschränken (32), wie sie diese Nachricht erhalten.

4. Verfahren nach einem der Ansprüche 1 bis 3, **dadurch gekennzeichnet, dass** die Neutralisierungsnachricht das Mobiltelefon beispielsweise durch einen Klingelton, ein Leuchtsignal, eine Nachricht auf dem Bildschirm oder durch eine Sprachnachricht, die vorab aufgenommen worden ist, oder nicht, informiert (34).

5. Verfahren nach einem der Ansprüche 1 bis 4, **dadurch gekennzeichnet, dass** die Neutralisierungsnachricht regelmäßig (27) gesendet wird.

6. Verfahren nach einem der Ansprüche 1 bis 5, **dadurch gekennzeichnet, dass** die Neutralisierungsnachricht eine Einschränkungsparametrierung (15) enthält, und im Speziellen eine Parametrierung eigens für eine Verwendungsklasse und/ oder eine Geräteklasse.

7. Verfahren nach einem der Ansprüche 1 bis 6, **dadurch gekennzeichnet, dass** die Bedingungen eine vergleichende Messung der Niveaus der Signale (SF1, SB1) beinhaltet, die vom Mobiltelefon empfangen werden, und von anderen Basisstationen kommen, die der neutralisierenden Basisstation benachbart sind.

8. Verfahren nach einem der Ansprüche 1 bis 7, **dadurch gekennzeichnet, dass** eine unumkehrbare Neutralisierung (30) ausgelöst wird, und das Mobiltelefon von Hand durch den Benutzer wieder zu aktivieren ist.

9. Verfahren nach einem der Ansprüche 1 bis 8, **dadurch gekennzeichnet, dass** die Neutralisierung verzögert (36) ist.

10. Verfahren nach Anspruch 10, **dadurch gekennzeichnet, dass** die Verzögerungsdauer in der Neutralisierungsnachricht enthalten (15) ist.

11. Verfahren nach einem der Ansprüche 1 bis 10, **dadurch gekennzeichnet, dass**
die Neutralisierungsnachricht eine geografische Beschreibung einer Neutralisierungszone enthält, im Speziellen eine geografische Beschreibung vom Typ GPS (xi, yi, zi),
- das Mobiltelefon seine geografische Position (XY) erfasst (59) und diese mit der geografischen Beschreibung, die in der Nachricht enthalten ist, vergleicht (61), und
- sich das Mobiltelefon einschränkt, wenn es sich in einer Neutralisierungszone befindet.

12. Verfahren nach einem der Ansprüche 1 bis 11, **dadurch gekennzeichnet, dass**
- das Netz die Position der Mobiltelefone misst, und
- das Netz jenen Mobiltelefonen eine Neutralisierungsnachricht zukommen lässt, die sich der geografischen Zone (ZF) nähern.

13. Verfahren nach einem der Ansprüche 1 bis 12, **dadurch gekennzeichnet, dass**
- die neutralisierende Basisstation eine Nachricht zur Zonenidentifizierung (LAI) sendet, die sich von einer Zonenidentifizierung ihrer benachbarten Stationen unterscheidet,
- das Mobiltelefon eine Nachricht mit der Anfrage hinsichtlich einer Zonenzuordnung an die neutralisierende Basisstation sendet (41),
- die Basisstation eine Neutralisierungsnachricht als Antwort auf diese Anfrage sendet.

14. Verfahren nach einem der Ansprüche 1 bis 13, **dadurch gekennzeichnet, dass** sich das Mobiltelefon auf das Abhören eingehender Nachrichten beschränkt.

15. Verfahren nach einem der Ansprüche 1 bis 14, **dadurch gekennzeichnet, dass** das Mobiltelefon zum Zeitpunkt seiner Inbetriebnahme überprüft, ob das Netz auch keine Neutralisierungsnachricht sendet.

16. Vorrichtung zum geografischen Management eines Moblitelefonnetzes, mit Mitteln (25, 55-57) zum Senden von Nachrichten zum Neutralisieren von Mobiltelefonen, die sich in seiner Umgebung befinden, und mit Mitteln (28-39, 58-62) in den Mobiltelefonen zum Einschränken (32) des Datenaustausches mit dem Netz je nach Empfang solcher Nachrichten, **dadurch gekennzeichnet, dass** sie eine Durchlassschleuse für Mobiltelefone enthält, wobei die Schleuse geschirmt, und mit einer Basisstation versehen ist, damit die Neutralisierungsnachricht auch die einzige Nachricht ist, die von den Mobiltelefonen beim Durchlaufen der Schleuse empfangen wird, sodass das Senden und/ oder das Empfangen und/ oder eine weitere Funktion des Mobiltelefons eingeschränkt ist (sind), und diese Einschränkung von der Klasse des Mobiltelefons selbst, oder in Bezug auf die Benutzerpersönlichkeit abhängt.
